# EUROPÄISCHE PATENTSCHRIFT

(11) **EP 1 922 216 B1**
(45) Veröffentlichungstag und Bekanntmachung des Hinweises auf die Patenterteilung: **01.08.2012**
(21) Anmeldenummer: 06774759.2
(22) Anmeldetag: 31.08.2006
(51) Int. Cl.: B60C 23/00

(54) **REIFENFÜLLANLAGE**
TYRE INFLATION SYSTEM
SYSTEME DE GONFLAGE DE PNEUS

(30) Priorität: 31.08.2005 AT 5982005 U
(43) Veröffentlichungstag der Anmeldung: 21.05.2008
(73) Patentinhaber: Magna Steyr Fahrzeugtechnik AG & Co. KG, 8041 Graz (AT)
(72) Erfinder: RUDOLF, Markus, A-8010 Graz (AT); WINKLER, Rene, A-8020 Graz (AT); BERNT, Axel, A-8052 Graz (AT); SCHWAMBERGER, Martin, A-8053 Graz (AT)
(74) Vertreter: Rausch, Gabriele
(86) Internationale Anmeldenummer: PCT/AT2006/000361
(87) Internationale Veröffentlichungsnummer: WO 2007/025320

(56) Entgegenhaltungen:
- EP-A- 1 371 506
- DE-A1- 4 009 687

## Beschreibung

Die Erfindung betrifft eine Reifenfüllanlage, bestehend aus einer Drucklufterzeugungsanlage, einem Druckluftspeicher, einem Ventilblock und pneumatisch angesteuerten Radventilen in den Rädern eines Kraftfahrzeuges, wobei jeweils ein fahrzeugfestes elektrisch betätigtes Vorsteuerventil mindestens ein Radventil ansteuert.

Eine ähnliche Reifenfüllanlage mit pneumatisch betätigbaren Radventilen ist aus der EP-A1-1371506 bekannt.

Aus der DE 40 09 687 A1 ist eine Reifenfüllanlage bekannt, deren Druckerzeuger über Achsventile mit nicht näher beschriebenen Radventilen verbunden ist. Dabei steuern erstere die letzteren durch einen Druckstoß in der zum Radventil führenden Versorgungsleitung. Aus den Reifen abgelassene Luft wird zum Druckerzeuger von diesem in einen Druckbehälter gefördert. Diese Anordnung hat zwar den Vorteil nur eine einzige Drehübertragung in das jeweilige Rad zu erfordern, doch ist damit eine genaue und - vor allem - betriebssichere Betätigung der Radventile nicht möglich.

Die in dem Österreichischen Gebrauchsmuster AT 5548 U1 beschriebene Anlage behebt diesen Mangel um den Preis, eine Druckleitung und eine Steuerleitung über eine Dreheintragung in das jeweilige Rad führen zu müssen. Die Radventile sind von einer gemeinsamen Druckluftquelle gespeiste pneumatisch gesteuerte Ventile. Weil der Druck in den Reifen für ein Druckluftsystem relativ nieder (2 bis maximal 5 Bar) und die zu fördernden Luftvolumina sehr groß sind, sind große Ventilquerschnitte erforderlich. Auch müssen die Radventile auf den minimalen Systemdruck von 2 Bar ausgelegt sein und ihre Funktion ist bei den auftretenden geringen Druckunterschieden unsicher. Ausserdem sind hohe Schaltgeschwindigkeiten erwünscht. Das erfordert sehr große Ventile und Aktuatoren, die im Rad eines Kraftfahrzeuges nicht unterzubringen sind.

Aus der DE 103 38 162 ist eine Drucklufterzeugungsanlage bekannt, die mehrere Verbraucherkreise (eine Druckluftbremsanlage und eine Luftfederanlage) mit verschiedenem Druckniveau versorgt. Die abgestuften Druckniveaus werden durch Druckbegrenzungsventile geschaffen. Das erfordert aber einen auf den maximalen Druck ausgelegten und daher großen Kompressor und verursacht hohe Verluste.

Es ist somit Aufgabe der Erfindung, eine Reifenfüllanlage vorzuschlagen, die so klein baut, dass sie in einem Rad unterzubringen ist und schnell und zuverlässig arbeitet. Nebstbei soll die Anlage möglichst einfach und billig sein. Das heisst möglichst einfache Druckerzeuger, kurze Leitungen und, wenn möglich Zusammenwirken mit anderen Druckluftverbrauchern.

Erfindungsgemäß wird das dadurch erreicht, dass die Drucklufterzeugungsanlage einen ersten und einen zweiten Kompressor umfasst, der erste Kompressor einem ersten Druckluftsystem Druckluft auf einem mittleren Druckniveau und der zweite Kompressor einem zweiten Druckluftsystem Druckluft auf einem hohen Druckniveau zur Verfügung stellt, wobei die Radventile mit dem ersten Druckluftsystem und die Vorsteuerventile mit dem zweiten Druckluftsystem in Verbindung stehen. Dadurch, dass die Vorsteuerventile auf hohem und weitgehend konstantem Druckniveau betrieben werden, sind die Aktuatoren der Radventile klein und arbeiten zuverlässig und schnell. Sie brauchen nur sehr wenig Druckluft. Der Einsatz von zwei Kompressoren erlaubt deren zielgerichtete und ökonomische Auslegung; des ersten Kompressors für tiefere Druckniveau und größere Fördermengen und des zweiten Kompressors für höheres Druckniveau und kleinere Fördermengen. Dank der Speicherbehälter brauchen die Kompressoren auch nicht für Verbrauchsspitzen ausgelegt zu sein.

In Weiterbildung der Erfindung versorgt das zweite Druckluftsystem noch weitere Verbraucher, insbesondere Luftfederbälge einer pneumatischen Radfederung beziehungsweise Niveauregelung. Das ergibt eine bessere Auslastung des zweiten Kompressors, wobei eine pneumatische Radfederung wegen der geringen Fördermengen und die Reifenfüllanlage einander gut ergänzen. Dabei kann zumindest einer der Luftfederbälge auch als Druckspeicher dienen.

Vorzugsweise ist die Saugseite des ersten Kompressors mit der Umgebung verbunden oder verbindbar und seine Druckseite über ein erstes Rückschlagventil mit einem Druckspeicher verbunden, und der zweite Kompressor ist sowohl mit dem ersten Druckluftsystem als auch mit dem zweiten Druckluftsystem verbindbar. So braucht der erste Kompressor nur fördern, wenn der Druckspeicher leer ist, und der zweite kann verschiedene Funktionen wahrnehmen. Dazu kann er in verschiedener Weise mit den beiden Systemen leitungsverbunden sein.

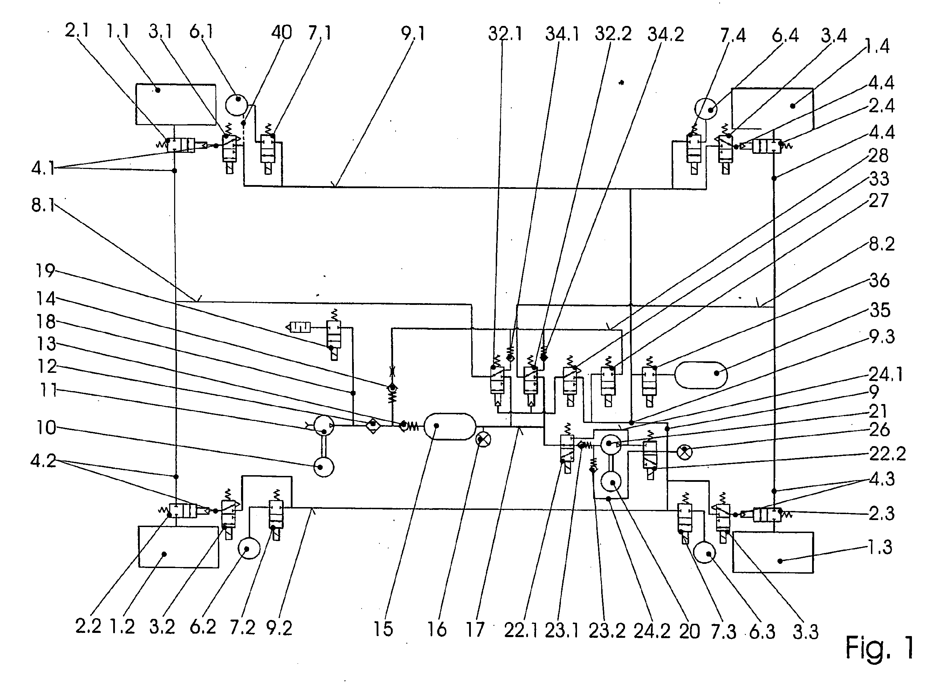

In einer ersten vorteilhaften Ausführungsform hat der zweite Kompressor an seiner Saugseite ein erstes Ventil und an seiner Druckseite ein zweites Ventil und zwei Umgehungsleitungen, wobei das erste Ventil die Verbindung zum ersten Druckluftsystem und das zweite Ventil die Verbindung zum zweiten Druckluftsystem herstellt. (Fig. 1). Über das erste Ventil kann er wahlweise mit seiner Saugseite entweder mit dem ersten Druckluftsystem oder über eine Umgehungsleitung und das zweite Ventil mit dem zweiten Druckluftsystem verbunden sein. Im letzteren Fall kann aus dem Hochdrucksystem (der Luftfederung) zurückströmende Luft in den Druckspeicher gefördert werden. Mit seiner Druckseite kann der zweite Kompressor wahlweise entweder über das zweite Ventil in das zweite Druckluftsystem fördern oder über die zweite Umgehungsleitung und das erste Ventil in das erste Druckluftsystem. Des Weiteren können das erste Druckluftsystem und das zweite Druckluftsystem über ein drittes Ventil miteinander verbindbar sein (Fig. 1).

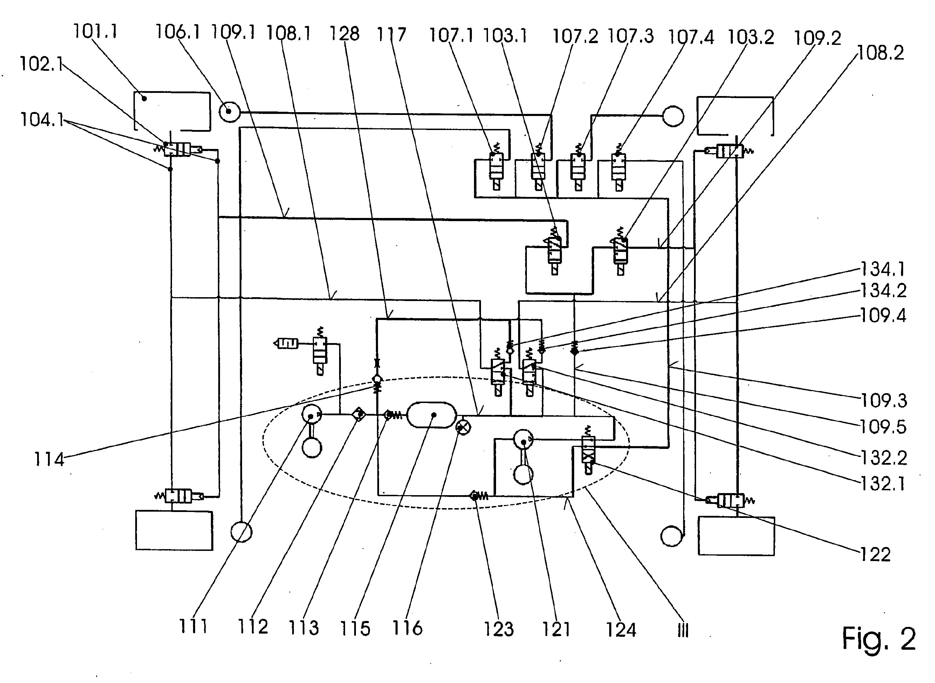

In einer zweiten vorteilhaften Ausführungsform ist sowohl die Saugseite als auch die Druckseite des zweiten Kompressors über ein zweites Ventil mit dem zweiten Druckluftsystem verbindbar, wobei die Saugseite weiters über ein zweites Rückschlagventil mit dem ersten Druckluftsystem verbunden ist, welches Rückschlagventil für eine Strömung zum Kompressor hin öffnet. ( Fig. 2.) In diesem Fall ist das zweite Ventil ein sogenanntes 4/2 - Ventil (4 Anschlüsse und zwei Stellungen). Auch in dieser Konstellation ist eine Förderung in das erste oder zweite Druckluftsystem und ein eine Aufnahme aus dem zweiten Druckluftsystem zurückströmender Druckluft möglich.

Um auch aus dem ersten Druckluftsystem zurückströmende Druckluft dem Druckspeicher zuführen zu können, ist im ersten Druckluftsystem ein viertes und gegebenenfalls (wenn der Luftdruck der Vorderräder und der Hinterräder unabhängig voneinander gesteuert werden soll) ein fünftes Magnetventil vorgesehen, das in seiner ersten Stellung den Weg zu dem beziehungsweise den Radventil(en) freigibt, oder in seiner zweiten Stellung aus diesen zurück strömende Luft über zumindest ein drittes Rückschlagventil einer weiteren Verwendung zuführt. (Fig 1 und 2). Das kann die Regeneration eines Lufttrockners sein. Weil es sich bei der Rückströmung aus der Reifenfüllanlage

(wenn der Reifendruck gesenkt wird) wieder um einen relativ großen Volumenstrom mit niederem Druck handelt, ist es vorteilhaft, das vierte und gegebenenfalls fünfte Magnetventil pneumatisch anzusteuern, wozu ein sechstes Ventil als Vorsteuerventil mit Druckluft aus dem zweiten Druckluftsystem (höheren Druckes) betrieben wird. (Fig. 1).

Weiters ist es im Rahmen der Erfindung, dass die Steuerventile der Luftfederanlage und die fahrzeugfesten elektrisch betätigten Vorsteuerventile für die Radventile in Radnähe angeordnet sind so braucht das zweite Druckluftsystem nur eine (Hoch-) Druckluftleitung zu jedem Rad zu führen. In Weiterverfolgung dieses Gedankens können die elektrisch betätigten Vorsteuerventile mit dem jeweiligen Luftfederbalg strömungsverbunden sein, sodass sie diesem die Steuerluft für die Radventile entnehmen. So ist im Fahrzeug ein Minimum an Druckluftleitungen zu verlegen.

Im Folgenden wird die Erfindung anhand von Abbildungen beschrieben und erläutert. Es stellen dar:
- Fig. 1: Ein Schema einer erfindungsgemäßen Anlage in einer ersten Ausführungsform,
- Fig. 2: Ein Schema einer erfindungsgemäßen Anlage in einer zweiten Ausführungsform,
- Fig. 3: Detail III in Fig. 2 in einer ersten Stellung,
- Fig. 4: Detail III in Fig. 2 in einer zweiten Stellung,
- Fig. 5: Detail III in Fig. 2 in einer dritten Stellung,
- Fig. 6: Detail III in Fig. 2 in einer vierten Stellung.

In **Fig. 1** sind die Räder eines Kraftfahrzeuges mit 1.1 bis 1.4, an oder in diesen angebrachte Radventile mit 2.1 bis 2.4 und zugehörige Vorsteuerventile mit 3.1. bis 3.4. bezeichnet. Radventile 2.1 bis 2.4 und Vorsteuerventile 3.1 bis 3.4 sind Teil einer Reifenfüllanlage. Luftfederbälge 6.1 bis 6.4 und Luftfederventile 7.1 bis 7.4 sind Teil einer Luftfederung beziehungsweise pneumatischen Niveauregelung. Reifenfüllanlage und Luftfederung stehen mit zwei Druckluftsystemen verschiedenen Druckniveaus in Verbindung.

Das erste Druckluftsystem führt einen zwischen 2 und 5 bar liegenden Druck in Leitungen 8.1 und 8.2, die über zweikanalige Dreheintragungen 4.1 bis 4.4, und die Radventile 2.1 bis 2.4 die Füllluft den Rädern, genauer deren Reifen, zur Verfügung stellen. Das zweite Druckluftsystem führt einen Druck von beispielsweise 16 bis 20 bar und besteht aus einer Druckleitung 9, die über Leitungen 9, 9.1, 9.2 und die Abzweige 9.3 die Vorsteuerventile 3.1 bis 3.4 und die Luftfederventile 7.1 bis 7.4 versorgen. Die Vorsteuerventile 3.1 bis 3.4 steuern Luft aus den Leitungen 9.1, 9.2 über dieselben zweikanaligen Dreheintragungen 4.1 bis 4.4 zu den pneumatisch gesteuerten Radventilen 2.1 bis 2.4.

Die nicht pneumatisch angesteuerten Ventile werden mittels elektrischer Signale gesteuert; die zugehörige Steuerzentrale und die zu den Ventilen führenden Steuerleitungen sind nicht eingezeichnet. In Fig. 1 ist noch mit strichlierter Linie 40 angedeutet, dass die Steuerluft auf hohem Druckniveau dem Vorsteuerventil 3.1 auch aus dem Luftfederbalg 6.1 zugeführt werden kann.

Zur Versorgung der beiden Druckluftsysteme ist ein von einem Elektromotor 10 angetriebener erster Kompressor 11 und ein von einem Elektromotor 20 angetriebener zweiter Kompressor 21 vorgesehen. Bei den Kompressoren handelt es sich vorzugsweise um Kolbenkompressoren mit inneren, nicht dargestellten Rückschlagventilen; deren Förderrichtung ist in den Figuren durch ein kleines Dreieck angedeutet. Der erste Kompressor 11 ist als Niederdruckkompressor ausgelegt, seine Saugseite ist mit der Atmosphäre verbunden. Seine Druckseite führt über einen Lufttrockner 12 und ein erstes Rückschlagventil 13 zu einem Druckspeicher 15 und weiter zu einer mit einem Drucksensor 16 bestückten Leitung 17, die bereits dem ersten Druckluftsystem angehört. Die Druckseite des ersten Kompressors 11 ist über eine Leitung 18 mit Schließventil 19 mit der Atmosphäre verbindbar.

Der zweite Kompressor 21 ist so ausgelegt, dass er vom Druckniveau des ersten Druckluftsystems auf das Druckluftniveau des zweiten Druckluftsystems mit optimalem Wirkungsgrad fördert, der aber auch - wenn auch mit suboptimalem Wirkungsgrad - verschiedene Druckbereiche überspannen kann. Dazu ist er in besonderer Weise mit dem ersten Druckluftsystem 8 und dem zweiten Druckluftsystem 9 verbunden. Auf der Saugseite des zweiten Kompressors 21 ist ein erstes Ventil 22. 1 und auf dessen Druckseite ein zweites Ventil 22.2, weiters ein drittes und ein viertes Rückschlagventil 23.1, 23.2 und eine erste und zweite Umgehungsleitung 24.1 und 24.2. Die beiden Ventile 21.1 und 21.2 sind hier sogenannte Drei/Zweiwegeventile (3/2-Ventile), die drei Anschlüsse auf zweierlei Weise miteinander verbinden.

Das erste Ventil 22.1 verbindet die dem ersten Druckluftsystem angehörende Leitung 17 wahlweise entweder über das Rückschlagventil 23.1 mit der Saugseite des zweiten Kompressors 21 oder über die erste Umgehungsleitung 24.1 mit dessen Druckseite. Die erste Umgehungsleitung 24.1 erlaubt die Rückführung von aus dem zweiten Druckluftsystem 9 abgelassener Druckluft in die Leitung 17 des ersten Druckluftsystems. Das zweite Ventil 22.2 verbindet das zweite Druckluftsystem 9 wahlweise entweder mit der Druckseite des zweiten Kompressors 21 oder mit der zweiten Umgehungsleitung 24.2, der über ein viertes Rückschlagventil 23.2 die Verbindung zur Saugseite des zweiten Kompressors 21 herstellt, sodass aus dem zweiten Druckluftsystem 9 abgelassene Druckluft wieder komprimiert und über die erste Umgehungsleitung 24.2 und das erste Ventil 22.1 der Leitung 17 des ersten Druckluftsystems zugeführt werden kann.

Somit schließt auf der dem Kompressor 21 abgewandten Seite das zweite Druckluftsystem 9 an das zweite Ventil 22.2 an, der dort herrschende Druck wird von einem zweiten Drucksensor 26 gemessen. Die zum zweiten Druckluftsystem gehörende Leitung 9 ist über ein drittes Ventil 27, eine Verbindungsleitung 28, das zweite Rückschlagventil 14 und das erste Rückschlagventil 13 mit dem Druckspeicher 15 verbindbar. Weiters speist das zweite Druckluftsystem 9 ein sechstes Ventil 33 welches als Vorsteuerventil für ein viertes und fünftes Ventil 32.1 und 32.2 wirkt. Die beiden letzteren Ventile sind somit pneumatisch angesteuert und stellen wahlweise die Verbindung zwischen dem ersten Druckluftsystem 8.1, 8.2 und entweder der zum Druckspeicher 15 führenden Leitung 17 oder über fünfte und sechste Rückschlagventile 34.1, 34.2 zu der Verbindungsleitung 28 und damit zum Druckspeicher 15 her. Im zweiten Druckluftsystem 9.1 kann ein weiterer über eine weiteres Ventil 36 zugänglicher Hochdruckspeicher 35 vorgesehen sein.

In der Ausführungsform der **Fig. 2** tragen analoge Element um 100 erhöhte Bezugszeichen. Die Ziffern hinter dem Dezimalpunkt werden wenn möglich weggelassen. Räder 101, Radventile 102 und Dreheintragungen 104 sind für alle vier Räder wie in Fig. 1. Das erste Druckluftsystem wird hier von den Leitungen 108.1 und 108.2 gebildet, und das zweite Druckluftsystem von den Leitungen 109.1 und 109.2, in denen die Vorsteuerventile 103.1 und 103.2 angeordnet sind. Weiters gehören zum zweiten Druckluftsystem die Zufuhrleitung 109.5 mit dem Rückschlagventil 109.4 zu den beiden Vorsteuerventilen 103.1 und 103.2, sowie eine gesonderte Leitung 109.3, die zu den Luftfederventilen 107.1 bis 107.4 und weiter zu den Luftfederbälgen 106.1 bis 106.4 führt.

Für die Bereitstellung der Druckluft für die beiden Druckluftsysteme sind wieder zwei Kompressoren 111, 121 vorgesehen. Der erste Kompressor speist wie in Fig. 1 einen Druckbehälter 115 und eine Leitung 117, die bereits zum ersten Druckluftsystem gehört und über ein viertes und ein fünftes Ventil 132.1, 132.2 mit den Leitungen 108.1, 108.2 verbunden ist. Die Ventile 132.1, 132.2 stellen wahlweise die Verbindung her zwischen den Leitungen 108.1, 108.2 des ersten Druckluftsystemes und entweder der Leitung 117 oder über Rückschlagventile 134.1, 134.2 einer Verbindungsleitung 128 über ein zweites Rückschlagventil 114 und ein erstes Rückschlagventil 113 zum Druckspeicher 115.

Der zweite Kompressor 121 ist hier über ein erstes Ventil 122 sowohl mit den Leitungen 109.3 und 109.5 des zweiten Druckluftsystems als auch mit der Leitung 117 des ersten Druckluftsystems verbindbar. Dieses Ventil 122 ist ein Ventil mit 4 Anschlüssen und zwei Stellungen (ein 4/2-Ventil). Weiters ist eine Umgehungsleitung 124 mit einem Rückschlagventil 123 vorgesehen, die das erste Ventil 122 mit dem Druckspeicher 115 verbindet. Die besonders einfache Einbindung des zweiten Kompressor 21 in Fig. 2 bietet trotzdem unerwartet viele Möglichkeiten für die verschiedensten Betriebszustände:

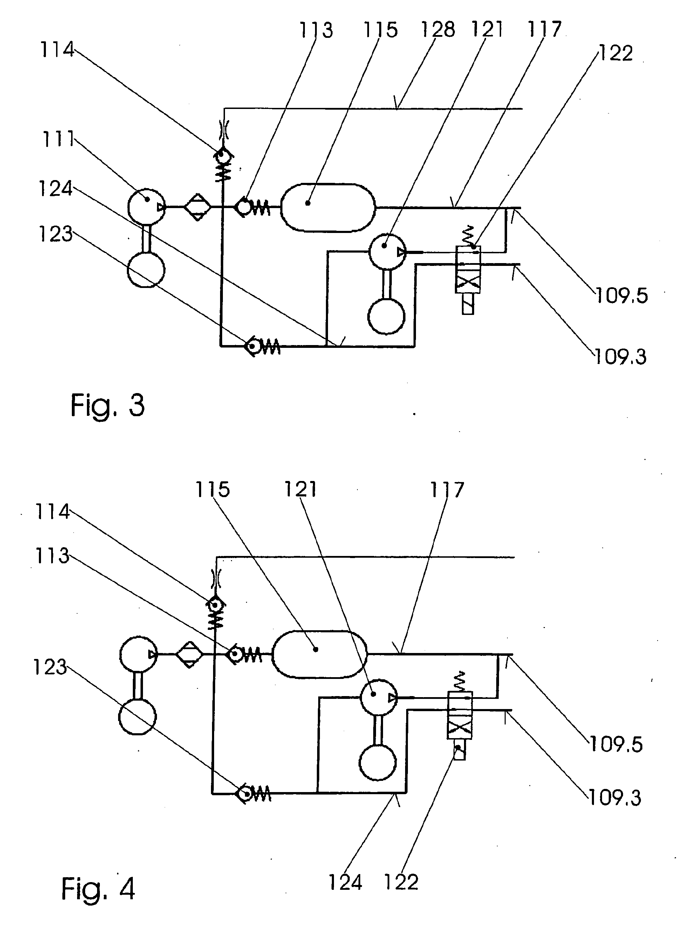

In **Fig. 3** wird der Druckspeicher 115 aufgefüllt, ohne dass in die Reifenfüllung oder Luftfederung eingegriffen wird. Dazu wird zunächst der erste Kompressor 111 und in der Folge der zweite Kompressor 121 eingeschaltet, sodass dann beide Kompressoren 111,121 parallel den Druckspeicher füllen; und zwar der erste Kompressor 111 über das Rückschlagventil 113 und der zweite Kompressor 121 über das Rückschlagventil 123 und das erste Ventil 122 in der gezeigten Stellung und weiter über die Leitung 117. Wenn im Druckbehälter 115 ein bestimmtes Druckniveau erreicht ist, schließt das Rückschlagventil 113 und der zweite Kompressor 21 steigert das Druckniveau im Druckspeicher 115 weiter, in dem er über das Rückschlagventil 123 die vom Kompressor 111 vorverdichtete Luft weiter komprimiert. Die so erfolgende zweistufige Verdichtung bringt eine Förderleistung bei verbesserten Wirkungsgrad und es ist ein höherer Endruck im Druckspeicher 115 erreichbar.

Wird gemäß **Fig. 4** das Druckniveau in den Luftfederbälgen abgesenkt, strömt die Luft von diesen über die Leitung 109.3, das Ventil 122 die Umgehungsleitung 124, den zweiten Kompressor 121 und die Leitung 117 in den Druckspeicher 115. Dabei sind die beiden Rückschlagventile 113, 123 geschlossen. Die Rekompression von Abluft aus den Luftfederbälgen bringt eine wesentliche Verbesserung des Wirkungsgrades und erlaubt es, den Druck im Druckspeicher 115 auf ein höheres Niveau zu bringen.

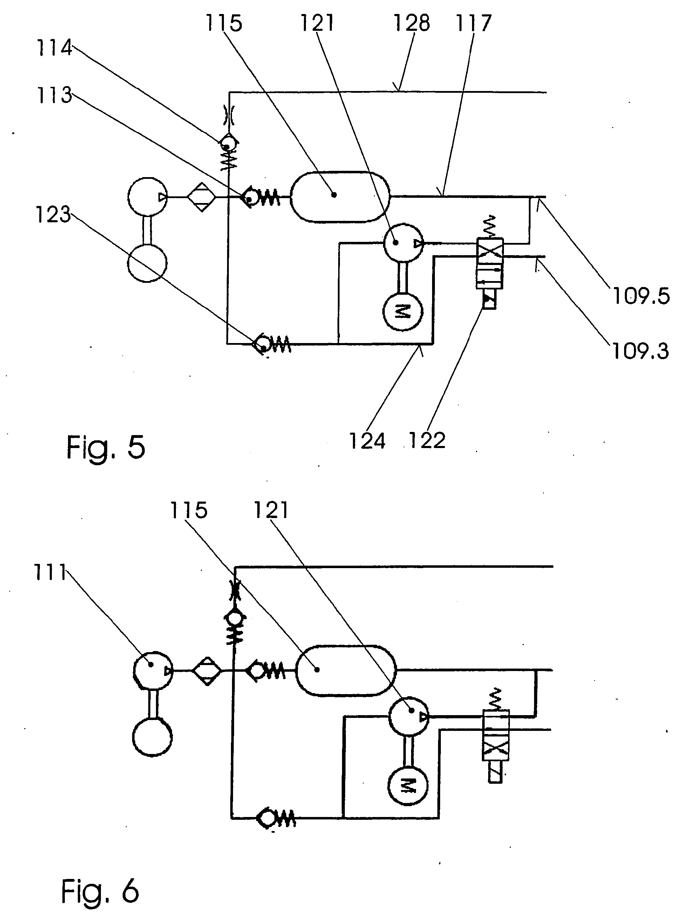

In **Fig. 5** wird das Kraftfahrzeug durch Befüllen der Luftfederbälge angehoben. Dazu wird Druckluft aus dem Druckspeicher 115 über das nunmehr umgeschaltete Ventil 122, dem Umgehungsleitung 124 zum zweiten Kompressor 121 geleitet und von dort zu dem zweiten Druckluftsystem angehörendem Druckleitung 109.3, welche zu den Luftfederventilen führt.

Gemäß **Fig. 6** können beide Kompressoren 111, 121 bei Defekt die Funktion des jeweils anderen schlecht und recht wahrnehmen. Ist der erste Kompressor 111 defekt, kann der zweite Kompressor 121 durch den Kompressor 111 hindurch ansaugen und Druckluft in das zweite Druckluftsystem 109 liefern. Bei Defekt des zweiten Kompressors 121 kann der erste Kompressor 111 immer noch, wenn auch nur sehr langsam, den Druckspeicher 115 befüllen.

## Patentansprüche

1. Reifenfüllanlage, bestehend aus einer Drucklufterzeugungsanlage, einem Druckluftspeicher, einem Ventilblock und pneumatisch angesteuerten Radventilen in den Rädern eines Kraftfahrzeuges, wobei jeweils ein fahrzeugfestes elektrisch betätigtes Vorsteuerventil mindestens ein Radventil ansteuert, **dadurch gekennzeichnet, dass** die Drucklufterzeugungsanlage einen ersten (11) und einen zweiten (21) Kompressor (11,21) umfasst, der erste Kompressor (11) einem ersten Druckluftsystem (8.1, 8.2) eingerichtet zur Aufnahme von Druckluft auf einem mittleren Druckniveau und der zweite Kompressor (21) einem zweiten Druckluftsystem (9.1, 9.2, 9.3) eingerichtet zur Aufnahme von Druckluft auf einem hohen Druckniveau zur Verfügung stellt, wobei die Radventile (2.1, 2.2, 2.3, 2.4) im ersten Druckluftsystem (8.1, 8.2) und die Vorsteuerventile (3.1, 3.2, 3.3, 3.4) im zweiten Druckluftsystem (9.1, 9.2, 9.3) angeordnet sind, und das zweite Druckluftsystem (9.1, 9.2, 9.3) abgesehen von der Reifenfüllanlage noch weitere Verbraucher versorgt, insbesondere Luftfederbälge (6.1, 6.2, 6.3, 6.4) einer pneumatischen Radfederung beziehungsweise Niveauregelung.

2. Reifenfüllanlage nach Anspruch 1, **dadurch gekennzeichnet, dass** zumindest einer der Luftfederbälge (6.1, 6.2, 6.3, 6.4) auch als Druckspeicher dient.

3. Reifenfüllanlage nach Anspruch 1, **dadurch gekennzeichnet, dass** der erste Kompressor (11;111) aus der Umgebung ansaugt und seine Druckseite über ein erstes Rückschlagventil (13;113) mit einem Druckspeicher (15;115) verbunden ist, und der zweite Kompressor (21;121) sowohl mit dem ersten Druckluftsystem (8.1, 8.2; 108.1, 108.2) als auch mit dem zweiten Druckluftsystem (9.1, 9.2, 9.3; 109.1, 109.2, 109.3) verbindbar ist. (Fig 1 und 2)

4. Reifenfüllanlage nach Anspruch 3, **dadurch gekennzeichnet, dass** der zweite Kompressor (21) an seiner Saugseite ein erstes Ventil (22.1) und an seiner Druckseite ein zweites Ventil (22.2) und zwei Umgehungsleitungen (24.1, 24.2) hat, wobei das erste Ventil (22.1) die Verbindung zum ersten Druckluftsystem (8.1, 8.2) und das zweite Ventil (22.2) die Verbindung zum zweiten Druckluftsystem (9.1, 9.2, 9.3) herstellt. (Fig. 1)

5. Reifenfullanlage nach Anspruch 1, **dadurch gekennzeichnet, dass** das erste Druckluftsystem (8.1, 8.2) und das zweite Druckluftsystem (9.1, 9.2, 9.3) über ein drittes Ventil (27) miteinander verbindbar sind. (Fig. 1)

6. Reifenfüllanlage nach Anspruch 3, **dadurch gekennzeichnet, dass** sowohl die Saugseite als auch die Druckseite des zweiten Kompressors (121) über ein zweites Ventil (122) mit dem zweiten Druckluftsystem (109.1, 109.2, 109.3) verbindbar sind, wobei die Saugseite weiters über ein Rückschlagventil (123) mit dem ersten Druckluftsystem (108.1, 108.2) verbunden ist, welches Rückschlagventil (123) für eine Strömung zum Kompressor (121) hin öffnet. (Fig. 2)

7. Reifenfüllanlage nach Anspruch 1, **dadurch gekennzeichnet, dass** im ersten Druckluftsystem (8.1, 8.2; 108.1, 108.2) ein viertes (32.1; 132.1) und gegebenenfalls fünftes Magnetventil (32.2; 132.2) vorgesehen ist, das in seiner ersten Stellung den Weg zu den Radventilen (2.1, 2.2, 2.3, 2.4; 102.1, 102.2, 102.3, 102.4) freigibt, oder in seiner zweiten Stellung aus diesen zurück strömende Luft über ein Rückschlagventil (34.1, 34.2; 134.1, 134.2) einer weiteren Verwendung (12; 112) zuführt. (Fig. 1 und 2)

8. Reifenfüllanlage nach Anspruch 7, **dadurch gekennzeichnet, dass** das vierte und fünfte Magnetventil (32.1, 32.2) pneumatisch angesteuert sind, wozu ein sechstes Ventil (33) als Vorsteuerventil mit Druckluft aus dem zweiten Druckluftsystem (9.1, 9.2, 9.3) betrieben ist. (Fig.1)

9. Reifenfüllanlage nach Anspruch 1, **dadurch gekennzeichnet, dass** die Steuerventile (7.1, 7.2, 7.3, 7.4) der Luftfederbälge (6.1, 6.2, 6.3, 6.4) und die fahrzeugfesten elektrisch betätigten Vorsteuerventile (6.1, 6.2, 6.3, 6.4) für die Radventile (2.1, 2.2, 2.3, 2.4) in Radnähe angeordnet sind.

10. Reifenfüllanlage nach Anspruch 9, **dadurch gekennzeichnet, dass** die elektrisch betätigten Vorsteuerventile (6.1, 6.2, 6.3, 6.4) mit dem jeweiligen Luftfederbalg (6.1, 6.2, 6.3, 6.4) strömungsverbunden sind, sodass sie diesem die Steuerluft für die Radventile (2.1, 2.2, 2.3, 2.4) entnehmen.

## Claims

1. Tyre inflation system, composed of a compressed air generation system, a compressed air accumulator, a valve block and pneumatically activated wheel valves in the wheels of a motor vehicle, wherein in each case one electrically actuated pilot control valve which is fixed to the vehicle activates at least one wheel valve, **characterized in that** the compressed air generation system comprises a first (11) and a second (21) compressor (11, 21), the first compressor (11) provides compressed air at a medium pressure level to a first compressed air system (8.1, 8.2) designed to receive compressed air and the second compressor (21) provides compressed air at a high pressure level to a second compressed air system (9.1, 9.2, 9.3) designed to receive compressed air, wherein the wheel valves (2.1, 2.2, 2.3, 2.4) are arranged in the first compressed air system (8.1, 8.2) and the pilot control valves (3.1, 3.2, 3.3, 3.4) are arranged in the second compressed air system (9.1, 9.2, 9.3), and the second compressed air system (9.1, 9.2, 9.3) provides a supply not only to the tyre inflation system but also to further consumers, in particular air spring bellows (6.1, 6.2, 6.3, 6.4) of a pneumatic wheel suspension system or ride-height control system.

2. Tyre inflation system according to Claim 1, **characterized in that** at least one of the air spring bellows (6.1, 6.2, 6.3, 6.4) also serves as a pressure accumulator.

3. Tyre inflation system according to Claim 1, **characterized in that** the first compressor (11; 111) sucks in air from the environment and the pressure side of said first compressor is connected via a first check valve (13; 113) to a pressure accumulator (15; 115), and the second compressor (21; 121) can be connected both to the first compressed air system (8.1, 8.2; 108.1, 108.2) and also to the second compressed air system (9.1, 9.2, 9.3; 109.1, 109.2, 109.3). (Figures 1 and 2)

4. Tyre inflation system according to Claim 3, **characterized in that** the second compressor (21) has, at its suction side, a first valve (22.1), and at its pressure side, a second valve (22.2) and two bypass lines (24.1, 24.2), wherein the first valve (22.1) produces the connection to the first compressed air system (8.1, 8.2) and the second valve (22.2) produces the connection to the second compressed air system (9.1, 9.2, 9.3). (Figure 1)

5. Tyre inflation system according to Claim 1, **characterized in that** the first compressed air system (8.1, 8.2) and the second compressed air system (9.1, 9.2, 9.3) can be connected to one another by means of a third valve (27). (Figure 1)

6. Tyre inflation system according to Claim 3, **characterized in that** both the suction side and also the pressure side of the second compressor (121) can be connected to the second compressed air system (109.1, 109.2, 109.3) by means of a second valve (122), wherein the suction side is furthermore connected to the first compressed air system (108.1, 108.2) by means of a check valve (123), which check valve (123) opens for a flow in the direction of the compressor (121). (Figure 2)

7. Tyre inflation system according to Claim 1, **characterized in that**, in the first compressed air system (8.1, 8.2; 108.1, 108.2), there is provided a fourth (32.1; 132.1) and possibly a fifth solenoid valve (32.2; 132.2) which, in its first position, opens up the path to the wheel valves (2.1, 2.2, 2.3, 2.4; 102.1, 102.2, 102.3, 102.4), or in its second position, supplies air flowing back from said wheel valves via a check valve (34.1, 34.2; 134.1, 134.2) for a further use (12; 112). (Figures 1 and 2)

8. Tyre inflation system according to Claim 7, **characterized in that** the fourth and fifth solenoid valves (32.1, 32.2) are pneumatically activated, for which purpose a sixth valve (33) is operated as a pilot control valve with compressed air from the second compressed air system (9.1, 9.2, 9.3). (Figure 1)

9. Tyre inflation system according to Claim 1, **characterized in that** the control valves (7.1, 7.2, 7.3, 7.4) of the air spring bellows (6.1, 6.2, 6.3, 6.4) and the electrically actuated pilot control valves (3.1, 3.2, 3.3, 3.4), which are fixed to the vehicle, for the wheel valves (2.1, 2.2, 2.3, 2.4) are arranged in the vicinity of the wheels.

10. Tyre inflation system according to Claim 9, **characterized in that** the electrically actuated pilot control valves (3.1, 3.2, 3.3, 3.4) are connected in terms of flow to the respective air spring bellows (6.1, 6.2, 6.3, 6.4) so as to extract from the latter the control air for the wheel valves (2.1, 2.2, 2.3, 2.4).

## Revendications

1. Installation de gonflage de pneus, constituée d'une installation de génération d'air sous pression, d'un accumulateur d'air sous pression, d'un bloc-soupapes et de soupapes de roue commandées pneumatiquement dans les roues d'un véhicule automobile, une soupape pilote à commande électrique fixée au véhicule commandant à chaque fois au moins une soupape de roue, **caractérisée en ce que** l'installation de génération d'air sous pression comprend un premier (11) et un deuxième (21) compresseur (11, 21), le premier compresseur (11) fournit à un premier système d'air sous pression (8.1, 8.2), prévu pour recevoir de l'air sous pression, de l'air sous pression à un niveau de pression moyen, et le deuxième compresseur (21) fournit à un deuxième système d'air sous pression (9.1, 9.2, 9.3), prévu pour recevoir de l'air sous pression, de l'air sous pression à un niveau de pression élevé, les soupapes de roue (2.1, 2.2, 2.3, 2.4) étant disposées dans le premier système d'air sous pression (8.1, 8.2) et les soupapes pilotes (3.1, 3.2, 3.3, 3.4) étant disposées dans le deuxième système d'air sous pression (9.1, 9.2, 9.3), et le deuxième système d'air sous pression (9.1, 9.2, 9.3) indépendamment de l'installation de gonflage de pneus, alimentant encore d'autres consommateurs, notamment des soufflets de ressorts pneumatiques (6.1, 6.2, 6.3, 6.4) d'une suspension de roue pneumatique ou d'une régulation de niveau.

2. Installation de gonflage de pneus selon la revendication 1, **caractérisée en ce qu'**au moins l'un des soufflets de ressorts pneumatiques (6.1, 6.2, 6.3, 6.4) sert aussi d'accumulateur de pression.

3. Installation de gonflage de pneus selon la revendication 1, **caractérisée en ce que** le premier compresseur (11 ; 111) aspire de l'air de l'environnement et son côté pression est connecté par le biais d'une première soupape de non retour (13 ; 113) à un accumulateur de pression (15 ; 115), et le deuxième compresseur (21 ; 121) peut être connecté à la fois au premier système d'air sous pression (8.1, 8.2 ; 108.1, 108.2) et au deuxième système d'air sous pression (9.1, 9.2, 9.3 ; 109.1, 109.2, 109.3) (figures 1 et 2).

4. Installation de gonflage de pneus selon la revendication 3, **caractérisée en ce que** le deuxième compresseur (21) présente au niveau de son côté aspiration une première soupape (22.1) et au niveau de son côté pression une deuxième soupape (22.2) et deux conduites de contournement (24.1, 24.2), la première soupape (22.1) établissant la connexion au premier système d'air sous pression (8.1, 8.2) et la deuxième soupape (22.2) établissant la connexion au deuxième système d'air sous pression (9.1, 9.2, 9.3) (figure 1).

5. Installation de gonflage de pneus selon la revendication 1, **caractérisée en ce que** le premier système d'air sous pression (8.1, 8.2) et le deuxième système d'air sous pression (9.1, 9.2, 9.3) peuvent être connectés l'un à l'autre par le biais d'une troisième soupape (27) (figure 1).

6. Installation de gonflage de pneus selon la revendication 3, **caractérisée en ce qu'**à la fois le côté aspiration et le côté pression du deuxième compresseur (121) peuvent être connectés par le biais d'une deuxième soupape (122) au deuxième système d'air sous pression (109.1, 109.2, 109.3), le côté aspiration étant en outre connecté par le biais d'une soupape de non retour (123) au premier système d'air sous pression (108.1, 108.2), laquelle soupape de non retour (123) s'ouvrant pour permettre un écoulement vers le compresseur (121) (figure 2).

7. Installation de gonflage de pneus selon la revendication 1, **caractérisée en ce que** dans le premier système d'air sous pression (8.1, 8.2 ; 108.1, 108.2) est prévue une quatrième (32.1 ; 132.1) et éventuellement une cinquième électrovanne (32.2 ; 132.2), laquelle, dans sa première position, libère le passage vers les soupapes de roue (2.1, 2.2, 2.3, 2.4 ; 102.1, 102.2, 102.3, 102.4), ou, dans sa deuxième position, achemine de l'air revenant de celles-ci par le biais d'une soupape de non retour (34.1, 34.2 ; 134.1, 134.2) vers une autre utilisation (12 ; 112) (figures 1 et 2).

8. Installation de gonflage de pneus selon la revendication 7, **caractérisée en ce que** la quatrième et la cinquième électrovanne (32.1, 32.2) sont commandées de manière pneumatique, et à cet effet une sixième soupape (33) est entraînée en tant que soupape pilote avec de l'air sous pression provenant du deuxième système d'air sous pression (9.1, 9.2, 9.3) (figure 1).

9. Installation de gonflage de pneus selon la revendication 1, **caractérisée en ce que** les soupapes de commande (7.1, 7.2, 7.3, 7.4) des soufflets de ressorts pneumatiques (6.1, 6.2, 6.3, 6.4) et les soupapes pilotes (3.1, 3.2, 3.3, 3.4) à commande électrique fixées au véhicule pour les soupapes de roue (2.1, 2.2, 2.3. 2.4) sont disposées à proximité de la roue.

10. Installation de gonflage de pneus selon la revendication 9, **caractérisée en ce que** les soupapes pilotes (3.1, 3.2, 3.3, 3.4) à commande électrique sont connectées fluidiquement au soufflet de ressort pneumatique respectif (6.1, 6.2, 6.3, 6.4), de sorte qu'elles prélèvent de celui-ci l'air de commande pour les soupapes de roue (2.1, 2.2, 2.3, 2.4).
